(19) Europäisches Patentamt

European Patent Office

Office européen des brevets

(11) **EP 1 188 557 A2**

(12) **EUROPÄISCHE PATENTANMELDUNG**

(43) Veröffentlichungstag:
20.03.2002   Patentblatt 2002/12

(51) Int Cl.7: **B32B 27/36**

(21) Anmeldenummer: 01120759.4

(22) Anmeldetag: **07.09.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **15.09.2000   DE 10045603**

(71) Anmelder: **Mitsubishi Polyester Film GmbH
65203 Wiesbaden (DE)**

(72) Erfinder:
• **Müller, Harald, Dr.
65232 Taunusstein (DE)**

• **Murschall, Ursula, Dr.
55283 Nierstein (DE)**
• **Stopp, Andreas
55218 Ingelheim (DE)**
• **Bennett, Cynthia, Dr.
55232 Alzey (DE)**

(74) Vertreter: **Schweitzer, Klaus, Dr. et al
Patentanwaltskanzlei Zounek,
Industriepark Kalle-Albert,
Gebäude H391
Rheingaustrasse 190-196
65174 Wiesbaden (DE)**

(54) **Verfahren zum Herstellen einer biaxial orientierten Polyesterfolie mit hohen Geschwindigkeiten, danach hergestellte Folie und ihre Verwendung**

(57)   Die Erfindung betrifft eine ein- oder mehrschichtige, biaxial orientierte Folie, die überwiegend aus einem kristallisierbaren, thermoplastischen Polyester aufgebaut ist und bei Endgeschwindigkeiten von größer/gleich 340 m/min herstellbar ist. Erfindungsgemäß enthält die Folie einen Polyesterrohstoff, der einen spezifischen, elektrischen Schmelzewiderstand im Bereich von $1,5 \cdot 10^7$ bis $30 \cdot 10^7$ $\Omega \cdot$cm besitzt. Die Erfindung betrifft auch ein Verfahren zum Herstellen der Folie durch Extrusion, anschließendes Strecken, Thermofixieren und Aufrollen bei hohen Geschwindigkeiten von ≥340 m/min und ihre Verwendung für qualitativ hochwertige Anwendungen.

**Beschreibung**

Die Erfindung betrifft eine ein- oder mehrschichtige, biaxial orientierte Folie, die überwiegend aus einem kristallisierbaren, thermoplastischen Polyester aufgebaut ist. Die Folie zeichnet sich dadurch aus, dass sie wirtschaftlich bei hoher Oberflächenqualität und mit Geschwindigkeiten von mehr als 340 m/min hergestellt werden kann. Die Erfindung betrifft ferner ein Verfahren zur Herstellung der Folie sowie ihre Verwendung.

Bei der Herstellung von Folien mit Dicken im Bereich zwischen 0,5 und 350 μm werden Kunststoffgranulate zunächst in einem Extruder aufgeschmolzen und die extrudierte Kunststoffschmelze einer Breitschlitzdüse zugeleitet. Die aus der Breitschlitzdüse austretende weitgehend amorphe Vorfolie wird an einer innengekühlten Abzugs- und Kühlwalze aus poliertem Edelstahl angelegt und nach dem Verlassen der Abzugswalze längs und quer zur Maschinenlaufrichtung gestreckt, anschließend thermofixiert und aufgerollt.

Zum Stabilisieren des Anlegens der Vorfolie an die Abzugswalze werden im Stand der Technik zusätzlich Kräfte auf die Vorfolie in dem Bereich zwischen dem Austritt der Vorfolie aus der Breitschlitzdüse und dem Anlegepunkt auf der Abzugswalze aufgebracht. Die aufgebrachten zusätzlichen Kräfte können durch Anblasen der Vorfolie mit einem Luftstrahl aus einem Luftmesser, durch Einsprühen von Wasser in den Zwickel der Vorfolie vor dem Anlegepunkt auf der Abzugswalze, wodurch sich ein Wasserfilm auf der Abzugswalze ausbildet und durch Erzeugen eines elektrischen Feldes mittels einer an Hochspannung liegenden Elektrode erzeugt werden, wobei die Feldlinien des elektrischen Feldes auf die Oberfläche der Abzugswalze gerichtet sind. Die zusätzlich aufgebrachten Kräfte dienen dazu, die zwischen der Oberfläche der Abzugswalze und der Unterseite der Vorfolie, das ist die der Abzugswalze zugewandte Seite der Vorfolie, eingeschlossene Luft unter dem Zwickel der Vorfolie vor dem Anlegen der Vorfolie an die Abzugswalze möglichst weitgehend zu entfernen, um so das Anlegen der Vorfolie an die Walzenoberfläche über einen vorgegebenen Umschlingungswinkel zu stabilisieren. Wenn dies nicht gelingt, entstehen mehr oder weniger große Lufteinschlüsse, sogenannte "Pinning"-Blasen, die sich zwischen der Unterseite der Vorfolie und der Oberfläche der Abzugswalze befinden und die Oberflächenglätte und somit die Qualität der auf der Abzugswalze abgekühlten Vorfolie und anschließend auch der daraus hergestellten biaxial gestreckten Folie verschlechtern.

Es ist bekannt, als Elektrode für das Erzeugen eines elektrischen Feldes ein Metallband aus Edelstahl parallel zu der Abzugswalzenoberfläche anzuordnen, wobei das Metallband im Allgemeinen aus einer Metallfolie von etwa 20 μm Dicke in einer Breite von 10 mm ausgestanzt oder ausgeschnitten wird.

Aus dem deutsche Gebrauchsmuster G 9402027 ist eine Vorrichtung zur Herstellung von Folien, insbesondere von Dünn- oder Dünnstfolien, mit einer rotierenden Walze bekannt, mit der eine plastisch verformbare, durch eine Breitschlitzdüse zugeführte Folie gefördert und gestreckt wird, wobei zwischen der Walze und einem parallel in geringem Abstand zu der Walze angeordneten Metallband eine elektrische Spannung angelegt ist. Dadurch wird die zugeführte Folie an die Walze angelegt. Bei der bekannten Vorrichtung weist das Metallband eine scharfe Längskante auf, die der Walze nächstliegend angeordnet und auf diese gerichtet ist. Die scharfe Längskante ist nach Art einer Schneidkante an einem spitz zulaufenden Bereich des Metallbandes ausgebildet, wobei das Metallband nächstliegend in einem Abstand kleiner 6 mm zur Walze angeordnet ist. Die Mittellinie des spitz zulaufenden Bereichs ist auf den Mittelpunkt der Walze fluchtend ausgerichtet. Der Einsatz einer derartigen Metallband-Elektrode verbessert die Folienqualität.

Mit zunehmender Endgeschwindigkeit, d. h. mit einer Geschwindigkeit von mehr als 340 m/min bei der Folienherstellung wird die Ausbildung von "Pinning"-Blasen jedoch immer intensiver. Durch Erhöhung der elektrischen Spannung der Elektrode kann dem zwar noch in Grenzen entgegengewirkt werden, bei zu hohen Spannungen ergibt sich jedoch das Problem von elektrischen Durchschlägen zwischen Elektrode und Kühlwalze. Dadurch wird in der Folie ein massiver Defekt, d. h. eine extreme Dünnstelle über die Folienbreite erzeugt. Die Folie reißt ab, was wirtschaftlich sehr ungünstig ist. Das Verfahrensfenster zwischen "Pinning"-Blasen und Durchschlägen wird mit zunehmender Geschwindigkeit immer enger.

Aufgabe der vorliegenden Erfindung war es, eine biaxial orientierte Polyesterfolie mit einer Dicke im Bereich von 1 bis 20 μm mit Geschwindigkeiten von größer/gleich 340 m/min herzustellen, wobei bei dem Herstellungsprozess ein ausreichend großes Verfahrensfenster sichergestellt ist.

Gelöst wird die Aufgabe dadurch, dass für die Folienherstellung Polyesterrohstoff eingesetzt wird, der einen spezifischen, elektrischen Schmelzewiderstand im Bereich von $1,5 \cdot 10^7$ bis $30 \cdot 10^7$ Ω·cm, vorzugsweise von $2 \cdot 10^7$ bis $10 \cdot 10^7$ Ω·cm, insbesondere von $3 \cdot 10^7$ bis $6 \cdot 10^7$ Ω·cm, aufweist.

Bei Foliendicken zwischen 1 und 20 μm, die mit Endgeschwindigkeiten von ≥ 340m/min hergestellt und elektrisch angelegt werden, treten bei Einsatz von Polyesterrohstoff mit einem spezifischen Schmelzewiderstand von größer $30 \cdot 10^7$ Ω·cm dramatische "Pinning"-Blasen auf. Durch Erhöhung der Spannung werden die "Pinning"-Blasen zwar etwas reduziert, aber nicht beseitigt, da wiederum Durchschläge auftreten.

Liegt dagegen der spezifische elektrische Schmelzewiderstand unter $1,5 \cdot 10^7$ Ω·cm treten ebenfalls die beschriebenen Probleme auf.

Es war völlig überraschend, dass biaxial orientierte Polyesterfolien mit einer Dicke im Bereich von 1 μm bis 20 μm mit Endgeschwindigkeiten von ≥ 340 m/min frei von "Pinning"-Blasen und frei von Durchschlägen hergestellt werden konnten, wenn der eingesetzte Polyesterrohstoff einen spezifischen elektrischen Schmelzewiderstand im Bereich von $1,5 \cdot 10^7$ bis $30 \cdot 10^7$ Ω·cm, vorzugsweise zwischen $2 \cdot 10^7$ und $10 \cdot 10^7$ Ω·cm, insbesondere zwischen $3 \cdot 10^7$ und $6 \cdot 10^7$ Ω·cm, aufweist.

Die erfindungsgemäßen Folien können ein- oder mehrschichtig sein, sie können symmetrisch oder asymmetrisch aufgebaut sein, wobei verschieden rezepturierte, d.h. mit zusätzlichen Additiven ausgestattete, beziehungsweise rezepturierte oder nicht rezepturierte Polyester oder solche gleicher chemischer Zusammensetzung, jedoch mit unterschiedlichem Molekulargewicht und verschiedener Viskosität, durch Koextrusion vereinigt werden können.

Die erfindungsgemäße Folie besteht im wesentlichen aus einem kristallisierbaren Polyethylenterephthalat, aus einem kristallisierbarem Polyethylennaphthalat (PEN) oder Mischung daraus, wobei die Polyester einen spezifischen, elektrischen Schmelzewiderstand gemäß der Erfindung im Bereich von $1,5 \cdot 10^7$ bis $30 \cdot 10^7$ Ω·cm aufweisen.

Unter kristallisierbarem Polyethylenterephthalat oder kristallisierbarem Polyethylennaphthalat werden

- kristallisierbare Homopolymere
- kristallisierbare Compounds
- kristallisierbare Copolymere
- kristallisierbares Recyklat
- andere Variationen der kristallisierbaren Polyester

verstanden.

Die Herstellung der Polyester kann sowohl nach dem Umesterungsverfahren, z.B. mit Hilfe von Umesterungskatalysatoren wie z. B. Zn-, Mg-, Ca-, Mn-, Li- oder Ge-Salzen, wie auch nach dem Direktesterverfahren (PTA-Verfahren) erfolgen, bei dem Antimonverbindungen als Polykondensationskatalysatoren und Phosphorverbindungen als Stabilisatoren verwendet werden. Der IV-Wert (intrinsische Viskosität) der Polyester liegt vorzugsweise im Bereich von 0,5 bis 1,0 dl/g.

Beispiele für Polyester sind Polykondensate aus Terephthalsäure, Isophthalsäure oder 2,6-Naphthalindicarbonsäure mit Glykolen mit 2 bis 10 Kohlenstoffatomen wie Polyethylenterephthalat, Polybuthylenterephthalat, Poly-1,4-cyclohexylen-dimethylenterphthalat, Polyethylen-2,6naphthalindicarboxylat, Polyethylennaphthalat/Bibenzoat oder Polyethylen-p-hydroxy-benzoat.

Die Polyester können bis zu 50 Mol-%, insbesondere bis zu 30 Mol-%, aus Comonomereinheiten aufgebaut sein, wobei eine Variation in der Glykol- und/oder der Säurekomponente möglich ist. Als Säurekomponente können die Copolyester u. a. 4,4-Bibenzoesäure, Adipinsäure, Glutarsäure, Bernsteinsäure, Sebazinsäure, Phtalsäure, Isophthalsäure, 5-Na-sulfoisophthalsäure oder polyfunktionelle Säuren wie Trimelithsäure u. a. enthalten.

Erfindungswesentlich ist, dass der Polyesterrohstoff einen spezifischen, elektrischen Schmelzewiderstand im Bereich von $1,5 \cdot 10^7$ Ω·cm bis $30 \cdot 10^7$ Ω·cm aufweist.

Die Polyesterfolien können nach bekannten Verfahren aus einem Polyesterrohstoff mit ggf. weiteren Rohstoffen und/oder weiteren für technischen Folien üblichen Additiven in üblichen Mengen von 0,1 bis maximal 20 Gew.-% sowohl als Monofolie als auch als mehrschichtige, ggf. koextrudierte Folien mit gleichen oder unterschiedlich ausgebildeten Oberflächen hergestellt werden, wobei eine Oberfläche beispielsweise pigmentiert ist und die andere Oberfläche kein oder weniger Pigment enthält. Ebenso können eine oder beide Oberflächen der Folie nach bekannten Verfahren mit einer üblichen funktionalen Beschichtung versehen werden.

Bei dem bevorzugten Extrusionsverfahren zum Herstellen der Polyesterfolie wird das aufgeschmolzene Polyestermaterial durch eine Breitschlitzdüse extrudiert und als weitgehend amorphe Vorfolie auf einer Kühlwalze unter Einsatz eines elektrostatischen Feldes einer unter Hochspannung im Bereich von 4 bis 8 kV stehenden Elektrode angelegt und abgeschreckt. Diese Folie wird anschließend erneut erhitzt und in Längs- und Querrichtung bzw. in Quer- und Längsrichtung bzw. in Längs-, Quer- und nochmals in Längsrichtung und/oder Querrichtung gestreckt. Die Strecktemperaturen liegen im allgemeinen bei $T_g$ + 10 K bis $T_g$ + 60 K (mit $T_g$ = Glasübergangstemperatur), das Streckverhältnis der Längsstreckung liegt üblicherweise im Bereich von 2 bis 6, insbesondere von 3 bis 4,5 das der Querstreckung im Bereich von 2 bis 5, insbesondere von 3 bis 4,5 und das der ggf. durchgeführten zweiten Längsstreckung im Bereich von 1,1 bis 3. Die erste Längsstreckung kann ggf. gleichzeitig mit der Querstreckung (Simultanstreckung) durchgeführt werden. Anschließend folgt die Thermofixierung der Folie in einem Fixierrahmen bei Rahmentemperaturen im Bereich von 150 bis 250 °C, insbesondere von 170 bis 240 °C.

Die Geschwindigkeiten der Folie bei Ankunft am Wickler liegt bei mehr als 340m/min.

Dadurch dass die hergestellte Folie mit hohen Endgeschwindigkeiten ohne Durchschläge und frei von "Pinning"-Blasen hergestellt werden kann, ist die Produktion sehr wirtschaftlich. Auf Grund der hohen Folienqualität eignet sie sich für qualitativ hochwertige Anwendungen, wie z.B. Trägerfolien für magnetische Aufzeichnungsmaterialien, hochwertige Verpackungsfolien, Kondensatorfolien, Folie für Metallisierungsanwendungen, um nur einige zu nennen.

Die Erfindung wird nachfolgend anhand von Ausführungsbeispielen für den Fachmann noch näher erläutert:

Die Messung der einzelnen Eigenschaften erfolgt gemäß der folgenden Normen bzw. Verfahren.

**Spezifischer, elektrischer Schmelzewiderstand**

Der spezifische, elektrische Schmelzewiderstand wird nach der Methode von Brit. J. Appl. Phys. Volum 17, Seiten 1149 -1154 (1966) bestimmt. Die Schmelzetemperatur (Messtemperatur) beträgt 285 °C und der Widerstand wird sofort nach Anlegen einer Spannung von 100 V abgelesen.

**Mittlere Dicke**

Die mittlere Dicke $d_F$ wird bei bekannter Länge, Breite und Dichte einer Folie aus deren Gewicht bestimmt. Gemessen wird das Gewicht eines auf dem Zuschneidetisch vorbereiteten Folienstreifens, der aus der Mitte eines über die ganze Rollenbreite gehenden Musters genommen wird. Die Berechnung von $d_F$ erfolgt dann über die Beziehung:

$$d_F\ (\mu m) = \frac{m[g]}{l[mm] \cdot b[mm] \cdot d[g/cm^3]} \cdot 10^6$$

wobei gilt:

m = Masse des untersuchten Folienstücks
l = Länge der Probe
b = Breite der Probe
d = Dichte des untersuchten Materials

d = für Polyester 1,395 g/cm$^3$

Die einzelnen Probestreifen werden nach dem Zuschneiden auf einer Analysenwaage Mettler PM 200 (Höchstlast 200g) verwogen. Ein daran angeschlossener Computer vom Typ HP Vectra ES/12 übernimmt nach Eingabe von Maschine, Rollennummer alle Parameter aus dem OPUS Programm und errechnet damit die mittlere Dicke.

**IV-Wert (DCE)**

Die Standardviskosität SV (DCE) wird, angelehnt an DIN 53726, in Dichloressigsäure gemessen.
Die intrinsische Viskosität (IV) berechnet sich wie folgt aus der Standardviskosität

$$IV\ (DCE) = 6,67 \cdot 10^{-4}\ SV\ (DCE) + 0,118$$

**Pinning-Blasen**

Zur Untersuchung der Folie auf Pinning-Blasen wird ein 10 cm breiter Folienstreifen über die Breite der Originalrolle vor einem schwarzen Hintergrund unter monochromatischem Licht einer Natriumdampflampe (Wellenlänge 590nm) vorbeigeführt und betrachtet. Die auf der Folienoberfläche vorhandenen Pinning-Blasen werden mit einer 120-fachen Vergrößerung per Videokamera auf einen Bildschirm übertragen und bewertet.

Eine Pinning-Blasen freie Folie zeigt eine homogene, unstrukturierte Oberfläche.

Eine mit Pinning-Blasen behaftete Folie sieht leicht trüb aus und weist eine Oberfläche auf, die mit einer unzählbaren Anzahl kleinster Bläschen (Pünktchen) übersät ist. Die Anzahl der Bläschen bzw. Pünktchen liegt bei $\geq$ 5000 pro 100 cm$^2$ Folie.

**Beispiel 1**

Chips aus Polyethylenterephthalat, die 3000 ppm $CaCO_3$-Partikel mit einem mittleren Teilchendurchmesser von 0,7 $\mu$m, gemessen nach der Sedigraphmethode, enthielten (K135 der Fa. KOSA/Deutschland), mit einem SV-Wert von 780 und einem spezifischen, elektrischen Schmelzewiderstand von $4,2 \cdot 10^7$ $\Omega \cdot$cm wurden bei 160 °C auf eine Restfeuchte von 50ppm getrocknet und einem Extruder zugeführt. Durch Extrusion und anschließende stufenweise Orientierung in Längs- und in Querrichtung wurde eine einschichtige Folie mit einer Dicke von 13 um bei einer Endgeschwindigkeit von 380 m/min hergestellt. Das Längsstreckverhältnis betrug 4,6. Die Folie wurde zu einer Originalrolle mit 40.000 m Lauflänge aufgerollt.

Zum Anlegen des Schmelzfilms an die Kühlwalze wurde elektrostatisches Pinning verwendet. Die an die Elektrode angelegte Spannung betrug 5,6 kV.

Es entstanden keine "Pinning"-Blasen und keine Durchschläge, die zu Folienabrissen führten. Die Laufsicherheit war gut.

**Beispiel 2**

Mittels Koextrusionstechnologie wurde eine dreischichtige ABA-Folie hergestellt, wobei B die 11 μm dicke Basisschicht und A die jeweils 1 μm dicken Deckschichten, die auf beiden Seiten der Basisschicht B angeordnet sind, repräsentieren.

Das Polyethylenterephthalat für die Basisschicht hatte einen SV-Wert von 810 und einen spezifischen, elektrischen Widerstand von $3,6 \cdot 10^7$ Ω·cm (FL2CV, Fa. Toray/Frankreich). Für die Deckschichten wurde ebenfalls der Rohstoff FL2CV der Fa. Toray verwendet, der über Masterbatchtechnologie mit 5000 ppm $CaCO_3$-Partikeln mit einem mittleren Teilchendurchmesser von 0,7 μm, gemessen nach der Sedigraphmethode, ausgerüstet war. Die Endgeschwindigkeit der Folienproduktion lag bei 400 m/min. Die an eine Elektrode wie in Beispiel 1 angelegte Spannung betrug 5,8 kV. Das Längsstreckverhältnis betrug 4,6.

Wie in Beispiel 1 entstanden keine "Pinning"-Blasen und keine Durchschläge, die zu Folienabrissen führten. Die Laufsicherheit war gut.

**Vergleichsbeispiel 1**

Beispiel 1 wurde wiederholt. In Abänderung zu Beispiel 1 wurde ein PET-Rohstoff mit einem spezifischen, elektrischen Schmelzewiderstand von $82 \cdot 10^7$ Ω·cm (RT 49 der Fa. Kosa/Deutschland) eingesetzt. Es war unter keiner Spannungseinstellung möglich, den aus der Breitschlitzdüse austretenden Schmelzefilm ohne "Pinning"-Blasen auf die Kühlwalze anzulegen, ohne dass sich Durchschläge und damit Folienabrisse ereigneten.

**Vergleichsbeispiel 2**

Beispiel 2 wurde wiederholt. In Abänderung zu Beispiel 2 wurde ein PET-Rohstoff für die Basisschicht B und die Deckschichten A eingesetzt, der einen spezifischen, elektrischen Widerstand von $0,95 \cdot 10^7$ Ω·cm (Saehan A 9203, Korea), aufwies. Es war unter keiner Spannungseinstellung möglich ohne "Pinning"-Blasen den aus der Breitschlitzdüse austretenden Schmelzefilm auf der Kühlwalze anzulegen, ohne dass sich Durchschläge und damit Folienabrisse ereigneten.

Die Ergebnisse aller nach den Beispielen und den Vergleichsbeispielen hergestellten Folien sind zusammengefasst und auf einen Blick in der nachfolgenden Tabelle dargestellt.

## Tabelle 1

| | IV-Wert [dl/g] | Spezifischer elektrischer Widerstand [Ω·cm] | Längs-streck-verhältnis | Endge-schwindig-keit [m/min] | Angelegte Spannung [kV] | Pinning-Blasen | Durch-schläge | Lauf-sicherheit |
|---|---|---|---|---|---|---|---|---|
| Beispiel 1 | 0,6 | $4,2 \cdot 10^7$ | 4,0 | 380 | 5,6 | frei | nein | gut |
| Beispiel 2 | 0,66 | $3,6 \cdot 10^7$ | 4,1 | 400 | 5,3 | frei | nein | gut |
| Vergleichs-beispiel 1 | 0,6 | $82 \cdot 10^7$ | 4,0 | 380 | von 4 bis 8 | keine Anlegung ohne Pinning-Blasen möglich | ja | schlecht |
| Vergleichs-beispiel 2 | 0,66 | $0,95 \cdot 10^7$ | 4,1 | 400 | von 4 bis 8 | keine Anlegung ohne Pinning-Blasen möglich | ja | schlecht |

**Patentansprüche**

1. Ein- oder mehrschichtige, biaxial orientierte Folie, die überwiegend aus einem kristallisierbaren, thermoplastischen Polyester aufgebaut ist und bei Endgeschwindigkeiten von größer/gleich 340 m/min herstellbar ist, **dadurch ge-**

**kennzeichnet, dass** sie einen Polyesterrohstoff enthält, der einen spezifischen, elektrischen Schmelzewiderstand im Bereich von 1,5 · $10^7$ bis 30 · $10^7$ Ω·cm besitzt.

2. Folie nach Anspruch 1, **dadurch gekennzeichnet, dass** sie einen Polyesterrohstoff enthält, der einen spezifischen, elektrischen Schmelzewiderstand im Bereich von 2 · $10^7$ bis 10 · $10^7$ Ω·cm, vorzugsweise von 3 · $10^7$ bis 6 · $10^7$ Ω·cm, aufweist.

3. Folie nach Anspruch 1 oder 2, **dadurch gekennzeichnet, dass** sie eine Foliendicke im Bereich von 1 bis 20 μm besitzt.

4. Folie nach einem der Ansprüche 1 bis 3, **dadurch gekennzeichnet, dass** sie mehrschichtig und symmetrisch oder asymmetrisch aufgebaut ist, wobei verschieden rezepturierte, beziehungsweise rezepturierte oder nicht rezepturierte Polyester oder Polyester gleicher chemischer Zusammensetzung, aber mit unterschiedlichem Molekulargewicht und verschiedener Viskosität, durch Koextrusion vereinigt sind.

5. Folie nach einem der Ansprüche 1 bis 4, **dadurch gekennzeichnet, dass** sie im wesentlichen aus einem kristallisierbaren Polyethylenterephthalat, aus einem kristallisierbarem Polyethylennaphthalat oder aus einer Mischung daraus besteht, wobei die Polyester einen spezifischen, elektrischen Schmelzewiderstand im Bereich von 1,5 · $10^7$ bis 30 · $10^7$ Ω·cm aufweisen.

6. Folie nach einem der Ansprüche 1 bis 5, **dadurch gekennzeichnet, dass** der IV-Wert des Polyesters im Bereich von 0,5 bis 1,0 dl/g liegt.

7. Verfahren zum Herstellen einer Folie nach einem der Ansprüche 1 bis 6 durch Extrusion wobei das aufgeschmolzene Polyestermaterial durch eine Breitschlitzdüse extrudiert und als weitgehend amorphe Vorfolie auf einer Kühlwalze unter Einsatz eines elektrostatischen Feldes einer unter Hochspannung im Bereich von 4 bis 8 kV stehenden Elektrode anlegt und abgeschreckt, diese Vorfolie anschließend erneut erhitzt und in Längs- und Querrichtung bzw. in Quer- und Längsrichtung bzw. in Längs-, Quer- und nochmals in Längsrichtung und/oder Querrichtung gestreckt wird, wobei die Strecktemperaturen im Bereich von $T_g$ + 10 K bis $T_g$ + 60 K eingestellt werden, das Streckverhältnis der Längsstreckung im Bereich von 2 bis 6 eingestellt wird, insbesondere von 3 bis 4,5, das der Querstreckung im Bereich von 2 bis 5, insbesondere von 3 bis 4,5, und das der ggf. durchgeführten zweiten Längsstreckung im Bereich von 1,1 bis 3, **dadurch gekennzeichnet, dass** ein Polyesterrohstoff eingesetzt wird, der einen spezifischen, elektrischen Schmelzewiderstand im Bereich von 1,5 · $10^7$ bis 30 · $10^7$ Ω·cm besitzt.

8. Verfahren nach Anspruch 7, **dadurch gekennzeichnet, dass** die gestreckte Folie zur Thermofixierung in einem Fixierrahmen eingespannt und bei Rahmentemperaturen im Bereich von 150 bis 250 °C, insbesondere von 170 bis 240 °C, nachbehandelt wird.

9. Verfahren nach Anspruch 7 oder 8, **dadurch gekennzeichnet, dass** die thermofixierte Folie nach der Thermofixierung aufgerollt wird und dass die Geschwindigkeit beim Aufrollen auf einen Wert von größer/gleich 340 m/min eingestellt wird.

10. Verwendung einer Folie nach einem der Ansprüche 1 bis 6 für qualitativ hochwertige Anwendungen, wie Trägerfolien für magnetische Aufzeichnungsmaterialien, hochwertige Verpackungsfolien, Kondensatorfolien oder als Folie für Metallisierungsanwendungen.